Europäisches Patentamt

European Patent Office

Office européen des brevets

(11) Veröffentlichungsnummer: **0 375 996**

**A1**

# (12) EUROPÄISCHE PATENTANMELDUNG

(21) Anmeldenummer: **89122277.0**

(22) Anmeldetag: **02.12.89**

(51) Int. Cl.⁵: **B65G 15/60, B65H 5/02**

(30) Priorität: **22.12.88 DE 3843213**

(43) Veröffentlichungstag der Anmeldung:
**04.07.90 Patentblatt 90/27**

(84) Benannte Vertragsstaaten:
**AT CH DE FR GB IT LI NL**

(71) Anmelder: **UNILEVER NV**
**Burgemeester s'Jacobplein 1 P.O. Box 760**
**NL-3000 DK Rotterdam(NL)**
(84) **CH DE FR IT LI NL AT**

Anmelder: **UNILEVER PLC**
**Unilever House Blackfriars**
**London EC4P 4BQ(GB)**
(84) **GB**

(72) Erfinder: **Fastner, Josef**
**Reinhard-Mühl-Strasse 9**
**D-8953 Obergünzburg(DE)**

(74) Vertreter: **Hutzelmann, Gerhard et al**
**Duracher Strasse 22**
**D-8960 Kempten/Allgäu(DE)**

(54) Einrichtung zum Führen und Unterstützen eines Karton-Zuschnittes.

(57) Einrichtung zum Führen und Unterstützen eines Karton-Zuschnittes (2) od.dgl., der insbesondere mit einer siegelbaren Kunststoffoberfläche versehen ist, wobei zur Führung des Zuschnittes (2) ein Förderband (3) vorgesehen ist, das in einer U-förmig ausgebildeten Aufnahme (4) gelagert ist, in deren dem Förderband (3) zugekehrten Seite Durchtrittsöffnungen (6) für Druckluft vorgesehen sind.

Fig. 1

## Einrichtung zum Führen und Unterstützen eines Karton-Zuschnittes

Die Erfindung bezieht sich auf eine Einrichtung zum Führen und Unterstützen eines Karton-Zuschnittes od.dgl., der insbesondere mit einer siegelbaren Kunststoffoberfläche versehen ist.

Bei bekannten Einrichtungen dieser Art werden die Zuschnitte zwischen Riemen geführt, die ihrerseits auf einer Vielzahl dicht hintereinander angeordneter Rollen gelagert sind, die sehr leicht laufen und den Zuschnitten eine gute Unterstützung geben. Durch Verschmutzungen vor allem beim Erwärmen der Kunststoffoberfläche bei beschichtetem Material und der damit einhergehenden Erweichung des Kunststoffes, setzt sich dieser und der abgeriebene Kartonstaub teilweise an den Rollen ab. Im Anfangsstadium stört dies wenig, doch bauen sich der Kartonstaub und evtl. abgesetzter Kunststoff langsam auf und blockieren schließlich die Rollen vollständig, so daß sie sich nicht mehr drehen können.

Der Erfindung liegt die Aufgabe zugrunde, eine Einrichtung der genannten Art so auszugestalten, daß dieses Blockieren und dadurch bedingt ein Stillstand der Einrichtung bzw. ein großer Riemenverschleiß vermieden werden.

Diese Aufgabe wird erfindungsgemäß dadurch gelöst, daß zur Führung des Zuschnittes ein Förderband vorgesehen ist, das in einer U-förmig ausgebildeten Aufnahme gelagert ist, in deren dem Förderband zugekehrten Seite Durchtrittsöffnungen für Druckluft vorgesehen sind.

Bei einem derart gelagerten Förderband kann es nicht zum Blockieren von Lagern kommen. Durch die eingeblasene Druckluft wird dazu noch eine sehr reibungsarme Lagerung des Förderbandes erzielt, wodurch ein Verschleiß weitgehend vermieden wird.

Vorteilhaft ist es, wenn gemäß der Erfindung die Durchtrittsöffnungen und Laufflächen so gestaltet sind, daß sich ein tragfähiges Luftpolster aufbaut.

Sehr vorteilhaft ist es dabei, wenn erfindungsgemäß die Durchtrittsöffnungen als Bohrungen ausgebildet sind, die sich entlang einer Mittellinie erstrecken.

Damit wird ein sehr gleichmäßiges Luftpolster erzeugt, das zusammen mit der durchgehenden seitlichen Führung einen exakten Bandlauf und dadurch optimalen Transport der Zuschnitte ergibt.

Eine weitere vorteilhafte Ausgestaltung der Erfindung liegt darin, daß die Bohrungen durch eine wenigstens teilweise in die obere Seite eindringende Nut miteinander verbunden sind.

Auf diese Weise können geringfügige Unterschiede in der Menge der durch die einzelnen Bohrungen ausströmenden Luft ausgeglichen werden, wodurch auch über Länge der Einrichtung gesehen ein sehr gleichmäßiges Luftpolster entsteht.

In der Zeichnung ist die Erfindung anhand eines Ausführungsbeispieles veranschaulicht. Dabei zeigen:

**Fig. 1** einen Schnitt durch eine Einrichtung zum Führen und Unterstützen eines Karton-Zuschnittes und

**Fig. 2** eine Draufsicht auf die Einrichtung.

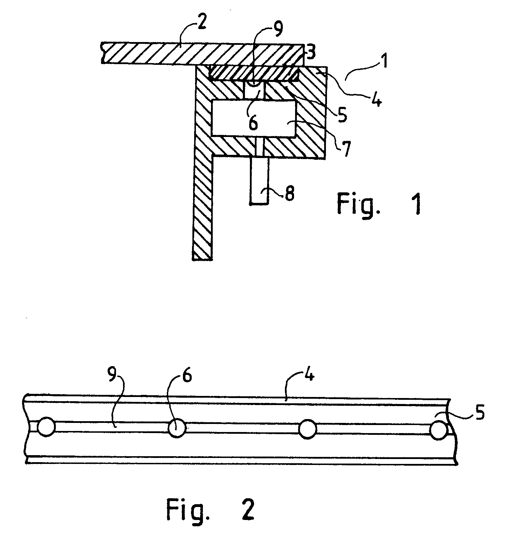

Mit 1 ist in Fig. 1 eine Einrichtung bezeichnet, die zum Führen und Unterstützen eines Karton-Zuschnittes 2 vorgesehen ist. Der Karton-Zuschnitt 2 ist beim beschriebenen Ausführungsbeispiel mit einer siegelbaren Kunststoffoberfläche versehen, welche zum Versiegeln beim Herstellen eines Behälters erwärmt, d.h. aufgeschmolzen wird. Der Karton-Zuschnitt 2 liegt auf einem Förderband 3 auf, das in einer U-förmig ausgebildeten Aufnahme 4 gelagert ist. In der dem Förderband 3 zugekehrten Seite 5 dieser Aufnahme 4 sind Durchtrittsöffnungen 6 für Druckluft vorgesehen, die unter das Förderband geblasen wird und dadurch eine Gleitschicht bildet. Die mit den Durchtrittsöffnungen versehene Seite der Aufnahme 4 gehört zu einem Strömungskanal 7, der an seiner Unterseite mit Luftzufuhrstutzen 8 ausgerüstet ist, an die nicht dargestellte Druckluftleitungen angeschlossen werden.

Wie aus Fig. 2 ersichtlich, sind die Durchtrittsöffnungen 6 als Bohrungen ausgebildet und erstrecken sich entlang einer Mittellinie in der Seite 5. Diese Bohrungen sind untereinander durch eine Nut 9 verbunden, die aus der Oberfläche der Seite 5 herausgearbeitet ist, sich aber nur zu einem Teil in die Materialstärke erstreckt.

Die Durchtrittsöffnungen 6 und die Nut 9 sorgen für eine sehr gleichmäßige Verteilung der zugeführten Druckluft, so daß auch das Förderband 3 sehr gleichmäßig geführt wird.

An der Oberseite des Karton-Zuschnittes 2 greift eine entsprechende Einrichtung an, so daß ein einwandfreier Transport und eine exakte Führung gewährleistet sind.

## Ansprüche

1. Einrichtung zum Führen und Unterstützen eines Karton-Zuschnittes od.dgl., der insbesondere mit einer siegelbaren Kunststoffoberfläche versehen ist, **dadurch gekennzeichnet,** daß zur Führung des Zuschnittes (2) ein Förderband (3) vorgesehen ist, das in einer U-förmig ausgebildeten Aufnahme (4) gelagert ist, in deren dem Förderband (3) zugekehrten Seite Durchtrittsöffnungen (6) für Druckluft vorgesehen sind.

3. Einrichtung nach Anspruch 1, **dadurch gekennzeichnet,** daß die Durchtrittsöffnungen (6) und Laufflächen so gestaltet sind, daß sich ein tragfähiges Luftpolster aufbaut.

3. Einrichtung nach Anspruch 1 od. 2, **dadurch gekennzeichnet**, daß die Durchtrittsöffnungen (6) als Bohrungen ausgebildet sind, die sich entlang einer Mittellinie erstrecken.

4. Einrichtung nach Anspruch 2 od. 3, **dadurch gekennzeichnet**, daß die Bohrungen (6) durch eine wenigstens teilweise in die obere Seite (5) eindringende Nut (9) miteinander verbunden sind.

Fig. 1

Fig. 2

**Europäisches Patentamt**

# EUROPÄISCHER RECHERCHENBERICHT

Nummer der Anmeldung

EP 89 12 2277

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 086 154 (JONKERS)<br>* Seite 7, Zeile 31 - Seite 8, Zeile 4; Seite 10, Zeilen 5-9; Figuren 1-5,9-11 * | 1-3 | B 65 G 15/60<br>B 65 H 5/02 |
| A | | 4 | |
| | --- | | |
| X | FR-A-2 077 820 (ATELIERS MECANIQUE et al.)<br>* Seite 3, Zeilen 10-24; Figur 1 * | 1,2 | |
| A | | 3,4 | |
| | --- | | |
| X | WO-A-8 502 599 (EAKES CO.)<br>* Seite 8, Zeilen 4-15; Figur 2 * | 1,2 | |
| A | | 3 | |
| | --- | | |
| A | GB-A-2 069 441 (MTS SYSTEMS)<br>* Seite 1, Zeilen 103-126; Figuren 2,3 * | 1-4 | |
| | --- | | |
| A | US-A-3 260 354 (CHIDDISTER et al.)<br>* Spalte 3, Zeilen 24-47; Figuren 2,4 *<br>----- | 1,2,4 | **RECHERCHIERTE SACHGEBIETE (Int. Cl.5)**<br><br>B 65 G<br>B 65 H |

Der vorliegende Recherchenbericht wurde für alle Patentansprüche erstellt

| Recherchenort | Abschlußdatum der Recherche | Prüfer |
|---|---|---|
| DEN HAAG | 27-03-1990 | NEVILLE D.J. |